# EUROPEAN PATENT APPLICATION

(11) **EP 4 443 854 A1**
(43) Date of publication of application: **09.10.2024**
(21) Application number: 22909772.0
(22) Date of filing: 08.12.2022
(51) Int. Cl.: H04L 69/22

(54) **PACKET PROCESSING METHOD AND APPARATUS, AND COMMUNICATION SYSTEM**

(30) Priority: 24.12.2021 CN 202111599975; 04.03.2022 CN 202210210985
(71) Applicant: Huawei Technologies Co., Ltd., Shenzhen, Guangdong 518129 (CN)
(72) Inventor: FANG, Sheng, Shenzhen, Guangdong 518129 (CN); WANG, Zhenxing, Shenzhen, Guangdong 518129 (CN); CHEN, Dapeng, Shenzhen, Guangdong 518129 (CN); PENG, Shuping, Shenzhen, Guangdong 518129 (CN)
(74) Representative: Maiwald GmbH
(86) International application number: PCT/CN2022/137679
(87) International publication number: WO 2023/116457

(57) **Abstract**

A packet processing method and apparatus, and a communication system are provided, and belong to the field of communication technologies. The method includes: After receiving an IPv6 packet including a first DOH, an intermediate node parses the first DOH based on a first policy, to obtain first information carried in the first DOH, and processes the IPv6 packet based on the first information. The IPv6 packet includes an RH and the first DOH is located after the RH, or the IPv6 packet does not include an RH. In this application, an intermediate node that performs parsing to obtain information carried in an IPv6 extension header may be flexibly specified, to resolve a problem that a parsing rule of an extension header of an existing IPv6 packet is not flexible enough. This application is used for packet processing.

## Description

This application claims priority to Chinese Patent Application No. 202111599975.7, filed on December 24, 2021 and entitled "METHOD FOR FLEXIBLY CARRYING AND READING INFORMATION IN IPV6 PACKET", and to Chinese Patent Application No. 202210210985.5, filed on March 4, 2022 and entitled "PACKET PROCESSING METHOD AND APPARATUS, AND COMMUNICATION SYSTEM", which are incorporated herein by reference in their entireties.

### TECHNICAL FIELD

This application relates to the field of communication technologies, and in particular, to a packet processing method and apparatus, and a communication system.

### BACKGROUND

A packet using an internet protocol version 6 (internet protocol version 6, IPv6) protocol is referred to as an IPv6 packet, and a transmission path of the IPv6 packet in a communication system includes a head node, an intermediate node, and a tail node.

Currently, an IPv6 packet header may include an IPv6 header (which is also referred to as an IPv6 basic header) and an extension header, where the extension header may include a hop by hop (hop by hop, HBH) extension header, a destination options header (destination options header, DOH), and the like. The extension header of the IPv6 packet may carry information, and the information may be parsed by a node on the transmission path. A current communication protocol defines parsing rules of the extension headers on the transmission path. For example, the HBH is parsed on each node on the transmission path, and the DOH is parsed on a node specified in a routing header or parsed by the tail node on the transmission path.

However, existing parsing rules are not flexible enough. With the development of network technologies, some network technologies need to flexibly specify some nodes in an IPv6 packet to perform parsing to obtain information carried in an extension header, and process the IPv6 packet based on the information.

### SUMMARY

This application provides a packet processing method and apparatus, and a communication system, to resolve a problem that a parsing rule of an extension header of an existing IPv6 packet is not flexible enough. The technical solutions are as follows.

According to a first aspect, a packet processing method is provided. The method includes: After receiving an IPv6 packet including a first destination options header (destination options header, DOH), an intermediate node on a transmission path of the IPv6 packet parses the first DOH based on a first policy, to obtain first information carried in the first DOH, and processes the IPv6 packet based on the first information.

The IPv6 packet includes a routing header (routing header, RH) and the first DOH is located after the RH, or the IPv6 packet does not include an RH. When the IPv6 packet does not include the RH, the first DOH may be any DOH (for example, a last DOH) of the IPv6 packet.

It should be noted that the transmission path of the IPv6 packet includes a head node, at least one intermediate node, and a tail node. Intermediate nodes that are on the transmission path and that perform the packet processing method provided in this application may be some or all intermediate nodes on the transmission path. This is not limited in this application.

It can be learned from the foregoing content that, the first information is carried in the first DOH of the IPv6 packet, and at least some intermediate nodes may forcibly parse the first DOH based on the local first policy, to obtain the first information carried in the first DOH, so as to process the IPv6 packet based on the first information, so that the intermediate node processes the IPv6 packet based on the first information. Therefore, a related local policy may be flexibly deployed on some intermediate nodes, so that the intermediate nodes can perform parsing to obtain information carried in the first DOH and perform related packet processing, that is, an intermediate node that performs parsing to obtain information carried in an IPv6 extension header is flexibly specified, to break through a parsing rule of an extension header of the IPv6 packet.

In addition, because the first DOH is an extension header parsed by the tail node, for intermediate nodes that do not support parsing of a DOH, the nodes do not need to parse the first DOH, and a problem of disconnection that occurs because the first DOH cannot be parsed does not occur on the nodes.

In addition, for the first information that is carried in the IPv6 packet and that is not expected to be used by each node through which the IPv6 packet passes, according to the packet processing method provided in this embodiment of this application, the first information can be carried in the first DOH, an intermediate node that supports parsing of a DOH and through which the IPv6 packet passes parses the first DOH, to obtain and use the first information, and an intermediate node that does not support parsing of the DOH and through which the IPv6 packet passes does not use the first information, thereby meeting a design requirement.

Optionally, the first policy includes: a first parsing indication, and the first parsing indication indicates to parse the first DOH, to obtain the first information carried in the first DOH. The first parsing indication may be understood as a switch for parsing the first DOH by the intermediate node. The intermediate node may parse the first DOH based on the first parsing indication in the first policy, to obtain the first information. Certainly, the first policy may alternatively not include the first parsing indication. This is not limited in this application.

Optionally, the first policy includes: a first processing manner corresponding to the first information; and when processing the IPv6 packet based on the first information, the intermediate node may process the IPv6 packet in the first processing manner. Before processing the IPv6 packet in the first processing manner, the intermediate node needs to determine the first processing manner in the first policy based on the first information.

Optionally, the first processing manner includes: a processing manner that is based on an app aware networking (app aware networking, APN) technology, an in-situ flow information telemetry (in-situ flow information telemetry, IFIT) technology, or a virtual transport network (virtual transport network, VTN) technology. Certainly, the first processing manner may alternatively be a processing manner that is based on another technology. This is not limited in this application.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

Optionally, the first DOH further carries second information different from the first information. For example, the second information may be parsed and used by the intermediate node. For example, the method further includes: The intermediate node parses the first DOH based on a second policy, to obtain the second information carried in the first DOH, where the second policy includes: a second processing manner corresponding to the second information. Then, the intermediate node may process the IPv6 packet in the second processing manner. The second processing manner may be the same as or different from the first processing manner.

Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. For the second policy, refer to the related description of the first policy. For the second information, refer to the related description of the first information. For the second processing manner, refer to the related description of the first processing manner. Details are not described herein again in embodiments of this application.

Optionally, regardless of whether the second information is parsed and used by the intermediate node, the second information may be parsed and used by another intermediate node. Alternatively, the first DOH may carry only the first information, and does not carry the second information. This is not limited in this application. In this embodiment of this application, that the first DOH carries the first information and the second information is used as an example. The first DOH may further carry more information in addition to the first information and the second information.

Optionally, the first information is an option of the first DOH, and the first information is carried in a type-length-value (type-length-value, TLV) field of the first DOH. The second information may also be an option of the first DOH, and the second information is carried in a TLV field of the first DOH. The first information and the second information may be carried in different TLV fields of the first DOH.

Optionally, the first policy is from the intermediate node, or the first policy is from a controller in a network. In this case, if the first policy is from the intermediate node, before parsing the first DOH based on the first policy, the intermediate node may further obtain the first policy in a static configuration manner. If the first policy is from the controller, before parsing the first DOH based on the first policy, the intermediate node may receive the first policy sent by the controller. Similar to the first policy, the second policy may also be from the intermediate node, or the second policy is from the controller.

Optionally, before parsing the first DOH based on the first policy, the intermediate node may determine the first policy based on an interface for receiving the IPv6 packet in the intermediate node; or the intermediate node may determine the first policy based on a routing entry corresponding to the IPv6 packet. When determining the first policy based on the interface for receiving the IPv6 packet in the intermediate node, the intermediate node may configure different policies based on different interfaces, so as to use different policies for IPv6 packets received on different interfaces in the intermediate node. When determining the first policy based on the routing entry corresponding to the IPv6 packet, the intermediate node may configure different policies based on different routing entries, so as to use different policies for IPv6 packets corresponding to different routing entries. Similar to determining of the first policy, before parsing the first DOH based on the second policy, the intermediate node may determine the second policy based on an interface for receiving the IPv6 packet in the intermediate node; or the intermediate node may determine the second policy based on a routing entry corresponding to the IPv6 packet.

According to a second aspect, a packet processing method is provided, where the method includes: An intermediate node receives a first policy sent by a controller in a network; and after receiving an IPv6 packet including a first DOH, the intermediate node parses the first DOH based on the first policy, to obtain first information carried in the first DOH, and processes the IPv6 packet based on the first information.

The IPv6 packet includes an RH and the first DOH is located after the RH, or the IPv6 packet does not include an RH. When the IPv6 packet does not include the RH, the first DOH may be any DOH (for example, a last DOH) of the IPv6 packet.

It should be noted that a transmission path of the IPv6 packet includes a head node, at least one intermediate node, and a tail node. Intermediate nodes that are on the transmission path and that perform the packet processing method provided in this application may be some or all intermediate nodes on the transmission path. This is not limited in this application.

The packet processing method provided in the second aspect may have an optional manner of any design in the first aspect. Details are not described in this application again.

According to a third aspect, a packet processing method is provided. The method includes: A controller in a network sends a first policy to at least one intermediate node on a transmission path of an IPv6 packet, where the at least one intermediate node is some or all intermediate nodes on the transmission path.

According to a fourth aspect, a packet processing apparatus is provided, where the packet processing apparatus belongs to an intermediate node on a transmission path of an IPv6 packet. It should be noted that the transmission path of the IPv6 packet includes a head node, at least one intermediate node, and a tail node, and some or all intermediate nodes on the transmission path include the packet processing apparatus provided in this application. This is not limited in this application.

The packet processing apparatus includes: a first receiving module, a first parsing module, and a first processing module. The first receiving module is configured to receive the IPv6 packet including a first destination options header DOH, where the IPv6 packet includes a routing header RH and the first DOH is located after the RH, or the IPv6 packet does not include an RH; the parsing module is configured to parse the first DOH based on a first policy, to obtain first information carried in the first DOH; and the processing module is configured to process the IPv6 packet based on the first information.

It can be learned from the foregoing content that, the first information is carried in the first DOH of the IPv6 packet, and at least some intermediate nodes may forcibly parse the first DOH based on the local first policy, to obtain the first information carried in the first DOH, so as to process the IPv6 packet based on the first information, so that the intermediate node processes the IPv6 packet based on the first information. Therefore, a related local policy may be flexibly deployed on some intermediate nodes, so that the intermediate nodes can perform parsing to obtain information carried in the first DOH and perform related packet processing, to break through a parsing rule of an extension header of the IPv6 packet.

In addition, because the first DOH is an extension header parsed by the tail node, for intermediate nodes that do not support parsing of a DOH, the nodes do not need to parse the first DOH, and a problem of disconnection that occurs because the first DOH cannot be parsed does not occur on the nodes.

In addition, for the first information that is carried in the IPv6 packet and that is not expected to be used by each node through which the IPv6 packet passes, according to the packet processing method provided in this embodiment of this application, the first information can be carried in the first DOH, an intermediate node that supports parsing of a DOH and through which the IPv6 packet passes parses the first DOH, to obtain and use the first information, and an intermediate node that does not support parsing of the DOH and through which the IPv6 packet passes does not use the first information, thereby meeting a design requirement.

Optionally, the first policy includes: a first parsing indication, and the first parsing indication indicates to parse the first DOH, to obtain the first information carried in the first DOH. The first parsing indication may be understood as a switch for parsing the first DOH by the intermediate node. The intermediate node may parse the first DOH based on the first parsing indication in the first policy, to obtain the first information. Certainly, the first policy may alternatively not include the first parsing indication. This is not limited in this application.

Optionally, the first policy includes: a first processing manner corresponding to the first information; and when processing the IPv6 packet based on the first information, the first processing module may process the IPv6 packet in the first processing manner. Before processing the IPv6 packet in the first processing manner, the intermediate node needs to determine the first processing manner in the first policy based on the first information.

Optionally, the first processing manner includes: a processing manner that is based on an APN technology, an IFIT technology, or a VTN technology. Certainly, the first processing manner may alternatively be a processing manner that is based on another technology. This is not limited in this application.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

Optionally, the first DOH further carries second information different from the first information. For example, the second information may be parsed and used by the intermediate node. For example, the packet processing apparatus further includes: a second parsing module and a second processing module. The second parsing module is configured to parse the first DOH based on a second policy, to obtain the second information carried in the first DOH, where the second policy includes: a second processing manner corresponding to the second information. The second processing module is configured to: process the IPv6 packet in the second processing manner. The second processing manner may be the same as or different from the first processing manner.

Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. For the second policy, the second information, and the second processing manner, refer to the first policy, the first information, and the first processing manner. Details are not described herein again in this application.

Optionally, regardless of whether the second information is parsed and used by the intermediate node, the second information may be parsed and used by another intermediate node. Certainly, the first DOH may alternatively carry only the first information, and does not carry the second information. This is not limited in this application.

Optionally, the first information is an option of the first DOH, and the first information is carried in a TLV field of the first DOH. The second information may also be an option of the first DOH, and the second information is carried in a TLV field of the first DOH. The first information and the second information may be carried in different TLV fields of the first DOH.

Optionally, the first policy is from the intermediate node, or the first policy is from a controller in a network. In this case, if the first policy is from the intermediate node, before parsing the first DOH based on the first policy, the intermediate node may further obtain the first policy in a static configuration manner. If the first policy is from the controller, before parsing the first DOH based on the first policy, the intermediate node may receive the first policy sent by the controller. Similar to the first policy, the second policy may also be from the intermediate node, or the second policy is from the controller.

Optionally, the packet processing apparatus further includes: a first determining module, configured to: before the parsing the first DOH based on a first policy, determine the first policy based on an interface for receiving the IPv6 packet in the intermediate node; or a second determining module, configured to: before the parsing the first DOH based on a first policy, determine the first policy based on a routing entry corresponding to the IPv6 packet. When determining the first policy based on the interface for receiving the IPv6 packet in the intermediate node, the intermediate node may configure different policies based on different interfaces, so as to use different policies for IPv6 packets received on different interfaces in the intermediate node. When determining the first policy based on the routing entry corresponding to the IPv6 packet, the intermediate node may configure different policies based on different routing entries, so as to use different policies for IPv6 packets corresponding to different routing entries. Similar to determining of the first policy, the packet processing apparatus further includes: a third determining module or a fourth determining module. The third determining module is configured to: before the parsing the first DOH based on a second policy, determine the second policy based on an interface for receiving the IPv6 packet in the intermediate node; or the fourth determining module is configured to: before the parsing the first DOH based on a second policy, determine the second policy based on a routing entry corresponding to the IPv6 packet.

According to a fifth aspect, a packet processing apparatus is provided, where the packet processing apparatus belongs to an intermediate node on a transmission path of an IPv6 packet. It should be noted that the transmission path of the IPv6 packet includes a head node, at least one intermediate node, and a tail node, and some or all intermediate nodes on the transmission path include the packet processing apparatus provided in this application. This is not limited in this application.

The packet processing apparatus includes: a second receiving module, a first receiving module, a first parsing module, and a first processing module. The second receiving module is configured to receive a first policy sent by a controller; the first receiving module is configured to receive the IPv6 packet including a first DOH, where the IPv6 packet includes a routing header RH and the first DOH is located after the RH, or the IPv6 packet does not include an RH; the first parsing module is configured to parse the first DOH based on a first policy, to obtain first information carried in the first DOH; and the first processing module is configured to process the IPv6 packet based on the first information.

The packet processing apparatus provided in the fifth aspect may have an optional manner of any design in the fourth aspect. Details are not described in this application again.

According to a sixth aspect, a packet processing apparatus is provided, where the packet processing apparatus includes: a sending module, configured to send a first policy to at least one intermediate node on a transmission path of an IPv6 packet, where the at least one intermediate node is some or all intermediate nodes on the transmission path.

According to a seventh aspect, a communication device is provided, including a processor and a memory. The memory stores a program, and the processor is configured to execute the program stored in the memory, to implement the packet processing method according to any design in the first aspect, the second aspect, or the third aspect.

According to an eighth aspect, a communication system is provided, where the communication system includes: a head node, at least one intermediate node, and a tail node on a transmission path of an IPv6 packet, where the at least one intermediate node includes a first intermediate node; the first intermediate node is configured to: receive the IPv6 packet including a first destination options header DOH, where the IPv6 packet includes a routing header RH and the first DOH is located after the RH, or the IPv6 packet does not include an RH; parse the first DOH based on a first policy, to obtain first information carried in the first DOH; and process the IPv6 packet based on the first information. For the method performed by the first intermediate node, refer to the method in any design in the first aspect or the second aspect.

Optionally, the first policy includes: a first parsing indication, and the first parsing indication indicates to parse the first DOH, to obtain the first information carried in the first DOH. The first parsing indication may be understood as a switch for parsing the first DOH by the intermediate node. The intermediate node may parse the first DOH based on the first parsing indication in the first policy, to obtain the first information. Certainly, the first policy may alternatively not include the first parsing indication. This is not limited in this application.

Optionally, the first policy includes: a first processing manner corresponding to the first information; and when processing the IPv6 packet based on the first information, the intermediate node may process the IPv6 packet in the first processing manner. Before processing the IPv6 packet in the first processing manner, the intermediate node needs to determine the first processing manner in the first policy based on the first information.

Optionally, the first processing manner includes: a processing manner that is based on an APN technology, an IFIT technology, or a VTN technology. Certainly, the first processing manner may alternatively be a processing manner that is based on another technology. This is not limited in this application.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

Optionally, the first DOH further carries second information different from the first information. For example, the second information may be parsed and used by the intermediate node. For example, the method further includes: The intermediate node parses the first DOH based on a second policy, to obtain the second information carried in the first DOH, where the second policy includes: a second processing manner corresponding to the second information. Then, the intermediate node may process the IPv6 packet in the second processing manner. The second processing manner may be the same as or different from the first processing manner.

Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. The second information may also be an option of the first DOH, and the second information is carried in a TLV field of the first DOH. The first information and the second information may be carried in different TLV fields of the first DOH. Similar to the first policy, the second policy may also be from the first intermediate node, or the second policy is from the controller. Similar to determining of the first policy, before parsing the first DOH based on the second policy, the first intermediate node may determine the second policy based on an interface for receiving the IPv6 packet in the first intermediate node; or may determine the second policy based on a routing entry corresponding to the IPv6 packet. For the second policy, the second information, and the second processing manner, refer to the first policy, the first information, and the first processing manner. Details are not described herein again in this application.

Optionally, regardless of whether the second information is parsed and used by the intermediate node, the second information may be parsed and used by another intermediate node. Certainly, the first DOH may alternatively carry only the first information, and does not carry the second information. This is not limited in this application.

Optionally, the at least one intermediate node further includes: a second intermediate node; and the second intermediate node is configured to: receive the IPv6 packet; parse the first DOH based on a third policy, to obtain the first information carried in the first DOH, where the third policy includes: a third processing manner corresponding to the first information, and the third processing manner is different from the first processing manner; and process the IPv6 packet in the third processing manner. For the method performed by the second intermediate node, refer to the method in any design in the first aspect or the second aspect. It can be learned that the transmission path of the IPv6 packet may include different intermediate nodes configured with different policies, but the different policies are associated with same information in the first DOH, and processing manners corresponding to the information in the different policies are different, so that different intermediate nodes can perform different processing on the IPv6 packet based on the same information carried in the first DOH.

Similar to the first policy, the third policy may also include a third parsing indication, and the third parsing indication indicates to parse the first DOH, to obtain the first information carried in the first DOH. Similar to the first processing manner, the third processing manner may also include a processing manner that is based on the APN technology, the IFIT technology, or the VTN technology. Similar to the first policy, the second policy may also be from the second intermediate node, or the second policy is from the controller. Similar to determining of the first policy, before parsing the first DOH based on the third policy, the second intermediate node may determine the third policy based on an interface for receiving the IPv6 packet in the second intermediate node; or may determine the third policy based on a routing entry corresponding to the IPv6 packet.

Optionally, the first DOH further carries third information different from the first information (the third information may be the same as or may be different from the second information), and the at least one intermediate node further includes: a third intermediate node; and the third intermediate node is configured to: receive the IPv6 packet; parse the first DOH based on a fourth policy, to obtain the third information carried in the first DOH, where the fourth policy includes: a fourth processing manner corresponding to the third information; and process the IPv6 packet in the fourth processing manner. For the method performed by the third intermediate node, refer to the method in any design in the first aspect or the second aspect. It can be learned that, the transmission path of the IPv6 packet may include different intermediate nodes configured with different (or same) policies, but the policies are associated with same or different information in the first DOH, and processing manners corresponding to the information in the first DOH in the different policies are the same or different.

Similar to the first policy, the fourth policy may also include a second parsing indication, and the second parsing indication indicates to parse the first DOH, to obtain the third information carried in the first DOH. Similar to the first processing manner, the fourth processing manner may also include a processing manner that is based on the APN technology, the IFIT technology, or the VTN technology. The third information may also be an option of the first DOH, and the third information is carried in a TLV field of the first DOH. When the first information is different from the third information, the first information and the third information may be carried in different TLV fields of the first DOH. Similar to the first policy, the fourth policy may also be from the third intermediate node, or the fourth policy is from the controller. Similar to determining of the first policy, before parsing the first DOH based on the fourth policy, the third intermediate node may determine the fourth policy based on an interface for receiving the IPv6 packet in the third intermediate node; or may determine the fourth policy based on a routing entry corresponding to the IPv6 packet.

It can be learned from the foregoing content that, in this application, one or more intermediate nodes may be designed based on a requirement to perform the packet processing method provided in embodiments of this application, and policies of the intermediate nodes are designed based on a requirement, to implement required processing on the IPv6 packet on the intermediate nodes.

Optionally, the communication system further includes a controller, and the controller is configured to send a policy to at least one intermediate node in the communication system. For example, the controller is configured to send the first policy (or the first policy and the second policy) to the first intermediate node, send the third policy to the second intermediate node, and send the fourth policy to the third intermediate node.

Optionally, the first information is an option of the first DOH, and the first information is carried in a TLV field of the first DOH.

Optionally, the first policy is from the first intermediate node, or the first policy is from a controller in a network. In this case, if the first policy is from the first intermediate node, before parsing the first DOH based on the first policy, the first intermediate node may further obtain the first policy in a static configuration manner. If the first policy is from the controller, before parsing the first DOH based on the first policy, the first intermediate node may receive the first policy sent by the controller.

Optionally, before parsing the first DOH based on the first policy, the first intermediate node may determine the first policy based on an interface for receiving the IPv6 packet in the intermediate node; or the first intermediate node may determine the first policy based on a routing entry corresponding to the IPv6 packet. When determining the first policy based on the interface for receiving the IPv6 packet in the first intermediate node, the first intermediate node may configure different policies based on different interfaces, so as to use different policies for IPv6 packets received on different interfaces in the first intermediate node. When determining the first policy based on the routing entry corresponding to the IPv6 packet, the first intermediate node may configure different policies based on different routing entries, so as to use different policies for

IPv6 packets corresponding to different routing entries.

For the second policy, the third policy, and the fourth policy, refer to the related description of the first policy. For the second information and the third information, refer to the related description of the first information. For the second processing manner, the third processing manner, and the fourth processing manner, refer to the related description of the first processing manner. Details are not described herein again in this application.

According to a ninth aspect, a computer-readable storage medium is provided. The computer-readable storage medium stores instructions, and when the instructions are run on a computer, the computer is enabled to perform the method according to any design in the first aspect, the second aspect, or the third aspect.

According to a tenth aspect, a computer program product including instructions is provided. When the computer program product is run on a computer, the computer is enabled to perform the method according to any design in the first aspect, the second aspect, or the third aspect.

For effects of the second aspect to the tenth aspect, refer to effects of corresponding designs of the first aspect. Details are not described herein again in this application.

### BRIEF DESCRIPTION OF DRAWINGS

FIG. 1 is a schematic diagram of a structure of a communication device according to an embodiment of this application;
FIG. 2 is a schematic diagram of a structure of another communication device according to an embodiment of this application;
FIG. 3 is a schematic diagram of a communication system according to an embodiment of this application;
FIG. 4 is a schematic diagram of a structure of an IPv6 packet according to an embodiment of this application;
FIG. 5 is a schematic diagram of an APN technology according to an embodiment of this application;
FIG. 6 is a flowchart of a packet processing method according to an embodiment of this application.
FIG. 7 is a schematic diagram of a structure of a first DOH according to an embodiment of this application;
FIG. 8 is a schematic diagram of a structure of another first DOH according to an embodiment of this application;
FIG. 9 is a schematic diagram of a structure of a packet processing apparatus according to an embodiment of this application;
FIG. 10 is a schematic diagram of a structure of another packet processing apparatus according to an embodiment of this application; and
FIG. 11 is a schematic diagram of a structure of another packet processing apparatus according to an embodiment of this application.

### DESCRIPTION OF EMBODIMENTS

To make principles and technical solutions of this application clearer, the following further describes implementations of this application in detail with reference to the accompanying drawings.

An embodiment of this application provides a communication system. The communication system includes a plurality of nodes. The node may be a communication device, or may be a part (for example, an interface board) of a communication device. The communication device may be a server, a server cluster, a gateway, a router, or the like. Optionally, the communication system may further include a controller, and the controller is communicatively connected to the plurality of nodes.

For example, the communication device may include: a processor. The processor is configured to: after being coupled to a memory and reading instructions in the memory, perform, based on the instructions, a method performed by the communication device described in embodiments of this application.

In the communication device, there may be a plurality of processors, and the memory coupled to the processor may be independent of the processor or the node (or the controller), or may be inside the processor or the communication device. The memory may be a physically independent unit, or may be storage space, a web disk, or the like on a cloud server. Optionally, there may be one or more memories. When there are a plurality of memories, the plurality of memories may be located at a same location or different locations, and may be used independently or in cooperation.

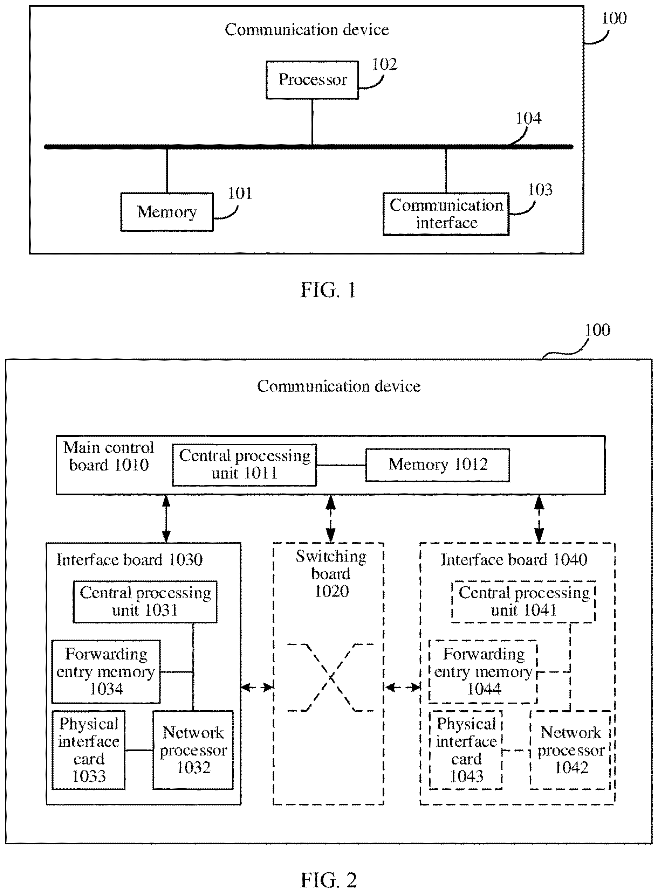

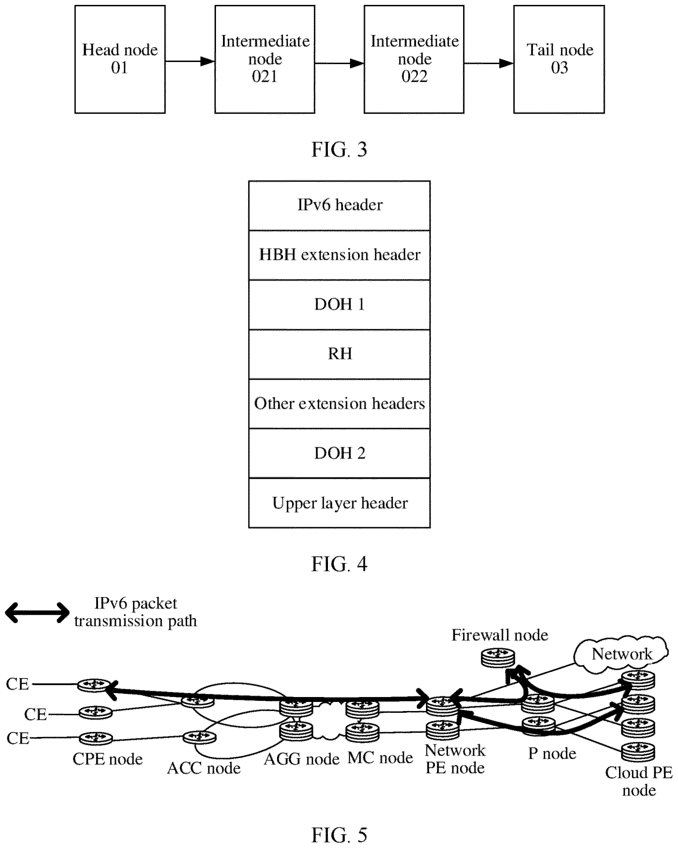

For example, when the memory is located inside the communication device, refer to FIG. 1. FIG. 1 is a schematic diagram of a structure of a communication device according to an embodiment of this application. A node 100 includes: a processor 102 and a memory 101. The memory 101 is configured to store a program, and the processor 102 is configured to invoke the program stored in the memory 101, so that the node performs a corresponding method or function. Optionally, as shown in FIG. 4, the node 100 may further include at least one communication interface 103 and at least one communication bus 104. The memory 101, the processor 102, and the communication interface 103 are communicatively connected through the communication bus 104. The communication interface 103 is configured to communicate with another device under control of the processor 102. The processor 102 may invoke, through the communication bus 104, the program stored in the memory 101.

For another example, FIG. 2 is a schematic diagram of a structure of another communication device according to an embodiment of this application. As shown in FIG. 2, the communication device includes: a main control board 1010 and an interface board 1030.

The main control board is also referred to as a main processing unit (main processing unit, MPU) or a route processor card (route processor card). The main control board 1010 is configured to control and manage components in the communication device, including route calculation, device management, device maintenance, and protocol processing functions. The main control board 1010 includes a central processing unit 1011 and a memory 1012.

The interface board 1030 is also referred to as a line processing unit (line processing unit, LPU) card, a line card (line card), or a service board. The interface board 1030 is configured to provide various service interfaces and forward a data packet. The service interfaces include, but not limited to, an Ethernet interface, a packet over a synchronous optical network (Synchronous Optical Network, SONET)/synchronous digital hierarchy (Synchronous Digital Hierarchy, SDH) (Packet over SONET/SDH, POS) interface, and the like. The Ethernet interface is, for example, a flexible Ethernet service interface (Flexible Ethernet Clients, FlexE Clients). The interface board 1030 includes: a central processing unit 1031, a network processor 1032, a forwarding entry memory 1034, and a physical interface card (physical interface card, PIC) 1033.

The central processing unit 1031 on the interface board 1030 is configured to control and manage the interface board 1030, and communicate with the central processing unit 1011 on the main control board 1010.

The network processor 1032 is configured to forward a packet. A form of the network processor 1032 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 1032 is configured to forward a received packet based on a forwarding table stored in the forwarding entry memory 1034, send the packet to a CPU (for example, the central processing unit 1010) for processing if a destination address of the packet is an address of the communication device 100, find a next hop and an outbound interface that correspond to the destination address in the forwarding table based on the destination address if the destination address of the packet is not the address of the communication device 100, and forward the packet to the outbound interface corresponding to the destination address. Processing on an uplink packet may include: processing at a packet ingress interface and forwarding table lookup, and processing on a downlink packet may include: forwarding table lookup and the like. In some embodiments, the central processing unit may also perform a function of the forwarding chip, for example, implement software forwarding based on a general CPU, so that the interface board does not need the forwarding chip.

The physical interface card 1033 is configured to implement a physical layer interconnection function. Original traffic enters the interface board 1030 from the physical interface card 1033, and a processed packet is sent out from the physical interface card 1033. The physical interface card 1033, also referred to as a subcard, may be mounted on the interface board 1030, and is responsible for converting an optical/electrical signal into a packet, performing validity check on the packet, and forwarding the packet to the network processor 1032 for processing. In some embodiments, the central processing unit may alternatively perform a function of the network processor 1032, for example, implement software forwarding based on a general CPU. Therefore, the network processor 1032 is not necessary in the physical interface card 1033.

Optionally, the communication device 100 includes a plurality of interface boards. For example, the communication device 100 further includes an interface board 1040. The interface board 1040 includes: a central processing unit 1041, a network processor 1042, a forwarding entry memory 1044, and a physical interface card 1043. Functions and implementations of components in the interface board 1040 are the same as or similar to those of the interface board 1030, and details are not described herein again.

Optionally, the communication device 100 further includes a switching board 1020. The switching board 1020 may also be referred to as a switch fabric unit (switch fabric unit, SFU). When the communication device 100 includes the plurality of interface boards, the switching board 1020 is configured to complete data exchange between the interface boards. For example, the interface board 1030 and the interface board 1040 may communicate with each other via the switching board 1020.

The main control board 1010 is coupled to the interface board. For example, the main control board 1010, the interface board 1030, the interface board 1040, and the switching board 1020 are connected to a system backboard through a system bus. In this way, interworking is implemented. In a possible implementation, an inter-process communication protocol (inter-process communication, IPC) channel is established between the main control board 1010 and the interface board 1040, and communication is performed between the main control board 1010 and the interface board 1040 through the IPC channel.

Logically, the communication device 100 includes a control plane and a forwarding plane. The control plane includes the main control board 1010 and the central processing unit 1011, and the forwarding plane includes components used for forwarding, for example, the forwarding entry memory 1034, the physical interface card 1033, and the network processor 1032. The control plane performs functions such as routing, generating a forwarding table, processing signaling and a protocol packet, and configuring and maintaining a device status. The control plane delivers the generated forwarding table to the forwarding plane. On the forwarding plane, based on the forwarding table delivered from the control plane, the network processor 1032 looks up the table, and forwards a packet received by the physical interface card 1033. The forwarding table delivered by the control plane may be stored in the forwarding entry memory 1034. In some embodiments, the control plane and the forwarding plane may be completely separated, and are not on a same device.

It should be noted that, there may be one or more main control boards. When there are a plurality of main control boards, the main control boards may include an active main control board and a standby main control board. There may be one or more interface boards. A stronger data processing capability of the communication device indicates a larger quantity of provided interface boards. There may also be one or more physical interface cards on the interface board. There may be no switching board or one or more switching boards. When there are a plurality of switching boards, load balancing and redundancy backup may be implemented together. In a centralized forwarding architecture, the communication device may not need a switching board, and the interface board undertakes a service data processing function of an entire system. In a distributed forwarding architecture, the communication device may have at least one switching board, and data is exchanged between a plurality of interface boards by using the switching board, to provide a capability of exchanging and processing a large capacity of data. Therefore, a data access and processing capability of the communication device in the distributed architecture is greater than the device in the centralized architecture. Optionally, the form of the communication device may alternatively be that there is only one card. In other words, there is no switching board, and functions of the interface board and the main control board are integrated on the card. In this case, the central processing unit on the interface board and the central processing unit on the main control board may be combined into one central processing unit on the card, to perform functions generated after the two central processing units are combined. A device in this form (for example, a communication device such as a low-end switch or router) has weak data exchange and processing capabilities. A specific architecture that is to be used depends on a specific networking deployment scenario. This is not limited herein.

A communication connection is established between nodes in the communication system, and an IPv6 packet may be forwarded between the nodes based on the communication connection. In addition, a transmission path of the IPv6 packet in the communication system may include a head node, an intermediate node (at least one), and a tail node, and the IPv6 packet is transmitted from the head node to the tail node by successively passing through the at least one intermediate node. For example, FIG. 3 is a schematic diagram of a communication system according to an embodiment of this application. As shown in FIG. 3, the communication system includes: a head node 01, an intermediate node 021, an intermediate node 022, and a tail node 03, and an IPv6 packet may sequentially pass through the intermediate node 021 and the intermediate node 022 from the head node 01 to the tail node 03.

It should be noted that in FIG. 3, an example in which a transmission path of the IPv6 packet includes two intermediate nodes is used. Optionally, the transmission path may alternatively include one intermediate node or more than two intermediate nodes. The communication system shown in FIG. 3 may further include another node other than the head node 01, the intermediate nodes (for example, the intermediate nodes 021 and 022), and the tail node 03. This is not limited in this embodiment of this application. The IPv6 packet may be any packet based on an IPv6 protocol, for example, a segment routing (segment routing IPv6, SRv6) packet or a native (native) IPv6 packet based on an IPv6 forwarding plane.

The IPv6 packet may include a plurality of parts that can carry information. Some parts are parsed by an intermediate node, and some parts are parsed by a tail node. After parsing a part of the IPv6 packet, a node can obtain information carried in the part.

For example, FIG. 4 is a schematic diagram of a structure of an IPv6 packet according to an embodiment of this application. As shown in FIG. 4, the IPv6 packet may include an IPv6 header (header), an HBH extension header, a DOH 1, an RH, other extension headers (other headers), a DOH 2, and a payload part. The payload part may also include an upper layer header (upper layer header) and another part. FIG. 4 shows only the upper layer header in the payload part.

The HBH extension header, the DOH 1, the RH, the other extension headers, and the DOH 2 of the IPv6 packet are all extension headers, and the IPv6 packet may include at least one of the extension headers. In FIG. 4, an example in which the IPv6 packet includes the HBH extension header, the DOH 1, the RH, the other extension headers, and the DOH 2 is used. Optionally, the IPv6 packet may alternatively not include an extension header. This is not limited in this embodiment of this application.

The extension header of the IPv6 packet may include at least one TLV field, and the extension header may carry information by using the TLV field. For example, the information may be an option (Option), that is, the extension header carries at least one option, and the options are encoded in the extension header in a form of a TLV field.

The extension header of the IPv6 packet is parsed by a specific node. For example, the HBH extension header is parsed by each intermediate node and the tail node through which the IPv6 packet passes; the DOH 1 is parsed by a node corresponding to each segment identifier in a segment list carried in the RH; the RH is parsed by a node corresponding to each segment identifier in the segment list carried in the RH; and the DOH 2 is parsed by the tail node. It should be noted that the RH is used to carry a segment list, where the segment list includes at least one segment identifier. When the IPv6 packet reaches a node corresponding to a segment identifier in the segment list, the node updates content of a destination address field of the IPv6 packet to a next segment identifier in the segment list.

Further, information carried in the IPv6 packet may indicate at least some nodes through which the packet passes to process the IPv6 packet. The following uses the three types of information carried in the IPv6 packet as an example for description.
(1) The IPv6 packet may carry information based on an APN technology (which is also referred to as information related to an APN technology), for example, an APN identifier (APNID). A core of the APN technology is to carry the APNID in the packet and provide a differentiated service of a finer granularity for the packet based on the APNID on some nodes through which the packet passes.

As shown in FIG. 5, in a process of transmitting an IPv6 packet between a customer provider edge (customer provider edge, CPE) node and a cloud provider edge (provider edge, PE) node, the IPv6 packet passes through a plurality of nodes such as an access (access, ACC) node, an aggregation (aggregation, AGG) node, a metro core node (metro core node, MC), a network PE node, a provider (provider, P) node, and a firewall node in FIG. 5. The CPE node is the head node in FIG. 3 and the cloud PE node is the tail node in FIG. 3, or the cloud PE node is the head node in FIG. 3 and the CPE node is the tail node in FIG. 3, and the ACC node, the AGG node, the MC node, the network PE node, the P node, and the firewall node are all the intermediate nodes in FIG. 3. The CPE node is connected to a customer edge (customer edge, CE) node (for example, a user terminal such as a mobile phone or a computer). The CPE node may encapsulate the IPv6 packet based on a packet sent by the CE node, and include an APNID in the encapsulated IPv6 packet.

A tunnel that passes through the firewall node and a tunnel that passes through the P node but does not pass through the firewall node exist between the cloud PE node and the network PE node. When the IPv6 packet carries the APNID, both the network PE node and the cloud PE node may introduce, based on the APNID carried in the IPv6 packet, the IPv6 packet into the tunnel that passes through the firewall node, so that the IPv6 packet passes through the firewall node during transmission. If the IPv6 packet does not carry the APNID, the network PE node and cloud PE node introduce the IPv6 packet to the tunnel that passes through the P node but does not pass through the firewall node. In this case, the IPv6 packet does not pass through the firewall node.

In addition, after receiving the IPv6 packet, the firewall node may also perform a differentiated service on the IPv6 packet based on the APNID carried in the IPv6 packet. For example, the firewall node may identify a user based on the APNID carried in the IPv6 packet, provide a firewall service corresponding to the user for the IPv6 packet, and then forward the IPv6 packet.

It should be noted that FIG. 5 shows only one networking manner of the communication system. The communication system may further have another networking manner. This is not limited in this embodiment of this application.

The APNID may include information such as an application (application, APP), a user (user), and a service level agreement (service level agreement, SLA). The node may perform differentiated processing on the IPv6 packet based on at least a part of the information in the APNID. In this way, a processing policy for the IPv6 packet may be set on the node based on the information in the APNID, and the node does not need to set a processing policy for each IPv6 packet, thereby reducing a quantity of policies set on the node. Further, because the APNID may carry richer information (for example, information previously included in the payload part of the IPv6 packet), if the IPv6 packet carries the APNID, a node in the communication system may provide a service of a finer granularity based on the APNID, or the communication system performs service processing on the IPv6 packet at a more appropriate network location.

The APNID may be carried in the HBH extension header and the DOH of the IPv6 packet. However, the HBH needs to be parsed by each intermediate node through which the IPv6 packet passes, and the IPv6 packet usually passes through a plurality of intermediate nodes during transmission. If an intermediate node cannot identify the HBH (for example, cannot identify a TLV field in the HBH) because the intermediate node is not upgraded (which is incompatible with another intermediate node), the intermediate node may consider the IPv6 packet as an error packet, and does not process the IPv6 packet based on the APNID and a corresponding policy. As a result, the IPv6 packet cannot be transmitted to the tail node, and a disconnection occurs. The IPv6 packet shown in FIG. 4 may include at least one DOH of the DOH 1 and the DOH 2. The DOH 1 may be parsed by a plurality of intermediate nodes. Therefore, the APNID carried in the DOH 1 also has a problem that the IPv6 packet cannot be transmitted to the tail node. The DOH 2 is parsed by only the tail node. Therefore, if the DOH 2 carries the APNID, a service of a finer granularity cannot be provided on the intermediate node based on the APNID.

(2) The IPv6 packet may carry information based on an IFIT technology (which is also referred to as information related to an IFIT technology).

The IFIT technology is a technology that carries specific information (the information based on the IFIT technology) in a packet to measure transmission quality of the packet on a node through which the packet passes. Based on different working modes, the specific information carried in the packet may need to be processed by the tail node, or may need to be processed by hop-by-hop nodes (for example, each intermediate node and the tail node) along a path.

When the IPv6 packet carries the information based on the IFIT technology, the intermediate node and/or the tail node through which the packet passes may measure transmission quality of the IPv6 packet based on the information based on the IFIT technology.

Similar to the APNID, when the information based on the IFIT technology is carried in a part that is parsed by a plurality of intermediate nodes and that is of the IPv6 packet, a problem of disconnection is caused because an intermediate node is not upgraded. When the information based on the IFIT technology is carried in a part that is parsed by the tail node and that is of the IPv6 packet, a problem that transmission quality of the IPv6 packet cannot be measured based on the information based on the IFIT technology on an intermediate node exists.

(3) The IPv6 packet may carry information based on a VTN technology (which is also referred to as information related to a VTN technology).

The VTN technology is a network slicing technology. A VTNID is carried in a packet to ensure transmission quality of the packet. When the IPv6 packet carries the information based on the VTN technology, the IPv6 packet generally needs to be processed by hop-by-hop nodes (for example, each intermediate node and the tail node) along a path.

Similar to the APNID, when the information based on the VTN technology is carried in a part that is parsed by a plurality of intermediate nodes and that is of the IPv6 packet, a problem of disconnection is caused because an intermediate node is not upgraded. When the information based on the VTN technology is carried in a part that is parsed by the tail node and that is of the IPv6 packet, a problem that transmission quality of the IPv6 packet cannot be ensured based on the VTN technology on an intermediate node exists.

In this embodiment of this application, that the IPv6 packet carries the three types of information is used as an example. Optionally, the IPv6 packet may alternatively carry at least one of the three types of information, or the IPv6 packet may carry other information different from the three types of information. In addition, each type of information is represented as an option in an extension header. When the extension header carries a plurality of types of different information, the information is represented as a plurality of options in the extension header, for example, an APN option, an IFIT option, and a VTN option. This is not limited in this embodiment of this application.

It can be learned from the foregoing content that all existing parsing rules are not flexible enough. With the development of network technologies, some network technologies need to flexibly specify some nodes in an IPv6 packet to perform parsing to obtain information carried in an extension header, and process the IPv6 packet based on the information. In addition, when information is carried in an IPv6 packet, there is a disconnection problem, or a problem that a corresponding technology cannot be implemented on an intermediate node. In addition, some information carried in the IPv6 packet may not be expected to be used by each node through which the IPv6 packet passes during design. However, in an IPv6 transmission process, the information may be used by each node through which the packet passes. As a result, a design requirement cannot be met.

Based on the foregoing problem, an embodiment of this application provides a packet processing method. The packet processing method can resolve a problem that a parsing rule of an extension header of an existing IPv6 packet is not flexible enough. In addition, a problem of disconnection when an IPv6 packet carries information can be avoided, and the packet processing method can implement technologies such as an APN technology, an IFIT technology, and a VTN technology on an intermediate node, and can use, based on the design requirement, the information carried in IPv6 on a specific node.

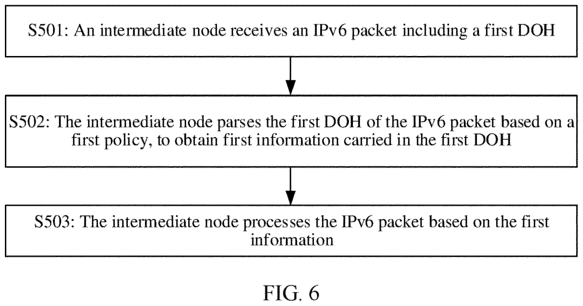

For example, FIG. 6 is a flowchart of a packet processing method according to an embodiment of this application. The packet processing method may be performed by an intermediate node in a communication system, for example, the intermediate nodes 021 and 022 in FIG. 3, or the ACC node, the AGG node, the MC node, the network PE node, the firewall node, the P node, or the like in FIG. 5. Some or all intermediate nodes on a transmission path of an IPv6 packet may perform the packet processing method. As shown in FIG. 6, the packet processing method includes the following steps.

S501: An intermediate node receives an IPv6 packet including a first DOH.

The IPv6 packet is a packet encapsulated by a head node on a transmission path of the IPv6 packet. The intermediate node is an intermediate node on the transmission path of the IPv6 packet. When the intermediate node is an intermediate node adjacent to the head node on the transmission path, the intermediate node may receive the IPv6 packet sent by the head node. When the intermediate node is an intermediate node that is not adjacent to the head node on the transmission path, another intermediate node further exists between the intermediate node and the head node. In this case, the intermediate node may receive the IPv6 packet forwarded by the another intermediate node.

The IPv6 packet includes the first DOH. It can be learned from the structure of the IPv6 packet shown in FIG. 4 that the IPv6 packet may include at least one DOH of the DOH 1 and the DOH 2. In one aspect, when the IPv6 packet includes an RH, the first DOH is located after the RH, and in this case, the first DOH is the DOH 2. In another aspect, when the IPv6 packet does not include an RH, the first DOH includes at least one DOH of the IPv6 packet. For example, the first DOH is any DOH of the IPv6 packet. It should be noted that, generally, when the IPv6 packet does not include the RH, the IPv6 packet does not include the DOH 1. In this case, the first DOH is a last DOH (that is, the DOH 2) of the IPv6 packet. However, in some special cases, when the IPv6 packet does not include the RH, the IPv6 packet may include the DOH 1 and the DOH 2. In this case, the first DOH may include the DOH 1 and/or the DOH 2.

It should be noted that, that a part of the IPv6 packet is located after another part means that the part is transmitted before the another part. Correspondingly, when the IPv6 packet includes the RH, that the first DOH is located after the RH means that the first DOH is transmitted after the RH.

With reference to the function of the extension header of the IPv6 packet shown in FIG. 4 and definition of the first DOH, it can be learned that the first DOH is an extension header parsed by a tail node. When encapsulating the IPv6 packet, the head node does not care about or specify which intermediate node uses information (for example, first information) carried in the first DOH. Therefore, the head node may include the information in the first DOH that is parsed by the tail node.

Further, the first DOH carries first information, and the first information is information based on a technology (the first information is information related to the technology). Correspondingly, a first policy associated with the first information is a policy based on the technology. The technology may be any technology, for example, an APN technology, an IFIT technology, or a VTN technology. In a specific implementation, the first information exists in a form of an option, for example, an APN option, an IFIT option, and a VTN option.

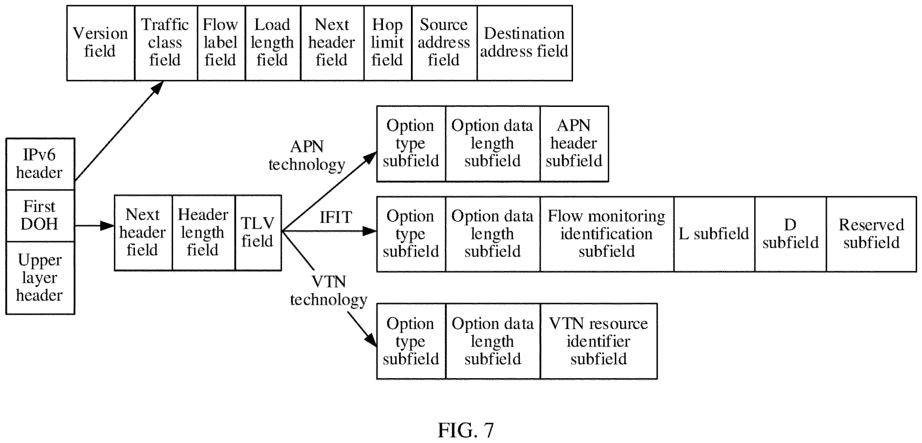

The first information is an option of the first DOH, and the first information may be carried in a TLV field of the first DOH. For example, as shown in FIG. 7, the IPv6 packet includes an IPv6 header, a first DOH, and a payload part (only an upper layer header in the payload part is shown in FIG. 7). The first DOH includes a next header (next header) field, a header length (header length, hdr len) field, and a TLV field that are sequentially arranged. The TLV field carries the first information, and the first information may be based on the APN technology, the IFIT technology, or the VTN technology.

When the first information is based on the APN technology, the TLV field includes: an option type (option type) subfield, an option data length (option data length) subfield, and an APN header (header) subfield that are sequentially arranged. The option type subfield indicates a type of the TLV field, the option data length subfield indicates a length of the TLV field, and the APN header subfield is used to carry the first information.

When the first information is based on the IFIT technology, the TLV field includes: an option type subfield, an option data length subfield, a flow monitoring identification (flow monitoring identification, flowmon ID) subfield, an L subfield, a D subfield, and a reserved (reserved) subfield that are sequentially arranged. The option type subfield indicates a type of the TLV field, and the option data length subfield indicates a length of the TLV field.

When the first information is based on the VTN technology, the TLV field includes: an option type subfield, an option data length subfield, and a VTN resource identification (resource identification, resource ID) subfield that are sequentially arranged. The option type subfield indicates a type of the TLV field, the option data length subfield indicates a length of the TLV field, and the VTN resource identification subfield is used to carry the first information.

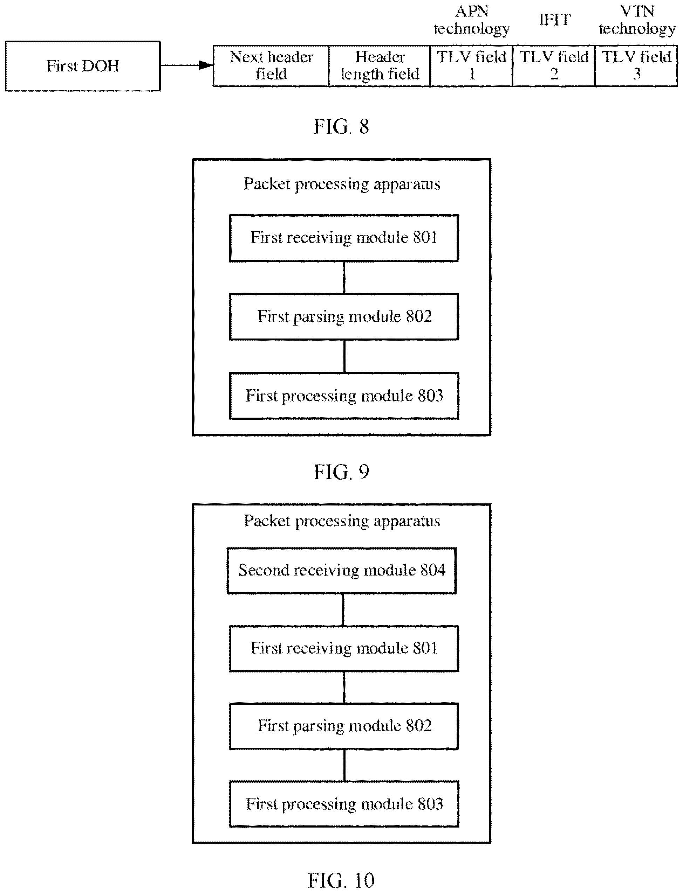

Further, as shown in FIG. 8, the IPv6 header includes: a version (version) field, a traffic class (traffic class) field, a flow label (flow label) field, a payload length (payload length) field, a next header field, a hop limit (hop limit) field, a source address (source address) field, and a destination address (destination address) field that are sequentially arranged.

S502: The intermediate node parses the first DOH of the IPv6 packet based on a first policy, to obtain first information carried in the first DOH.

Content of the first policy is diversified. For example, the first policy includes: a first parsing indication. The first parsing indication indicates the intermediate node to parse the first DOH of the IPv6 packet, so as to obtain the first information carried in the first DOH. The first parsing indication may be understood as a switch for parsing the first DOH by the intermediate node. For another example, the first policy includes: a first processing manner corresponding to the first information. When the IPv6 packet carries the first information, the intermediate node may process the IPv6 packet in the first processing manner.

For example, as shown in Table 1, the first policy may include a plurality of processing manners corresponding to a plurality of pieces of information. In this case, the first policy refers to: introducing an IPv6 packet including a first DOH carrying information 1 into a low-delay tunnel 1, and introducing an IPv6 packet including a first DOH carrying information 2 into a high-transmission-quality tunnel 2. When the first information carried in the IPv6 packet received by the intermediate node is the information 1, the first processing manner corresponding to the first information is: introducing the IPv6 packet into the low-delay tunnel 1, to ensure a transmission rate of the IPv6 packet. When the first information carried in the IPv6 packet is the information 2, the first processing manner corresponding to the first information is: introducing the IPv6 packet into the high-transmission-quality tunnel 2, to ensure transmission quality of the IPv6 packet.

**Table 1**

| Information | Processing manner |
|---|---|
| Information 1 | Introduce an IPv6 packet to a low-delay tunnel 1 |
| Information 2 | Introduce an IPv6 packet to a high-transmission-quality tunnel 2 |

In Table 1, an example in which the first policy includes a plurality of processing manners corresponding to a plurality of pieces of information, and different information corresponds to different processing manners is used. Optionally, different information may alternatively correspond to a same processing manner. The first policy may alternatively include one processing manner corresponding to one piece of information. This is not limited in this embodiment of this application.

Optionally, the first processing manner may include a processing manner that is based on the APN technology, the IFIT technology, or the VTN technology. For example, when the first processing manner includes the processing manner that is based on the APN technology, the first processing manner may be a processing manner of introducing the IPv6 packet into a tunnel, or another processing manner related to the APN technology. For another example, when the first processing manner includes the processing manner that is based on the IFIT technology, the first processing manner may be a processing manner in which transmission quality of the IPv6 packet is measured based on the information related to the IFIT technology carried in the IPv6 packet, or another processing manner related to the IFIT technology. For another example, when the first processing manner includes the processing manner that is based on the VTN technology, the first processing manner may be a processing manner in which a corresponding slice is selected based on the first information in the IPv6 packet to forward the IPv6 packet, or another processing manner related to the VTN technology.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

The first policy may further include another implementation. For example, the first policy not only includes the first parsing indication, but also includes the first processing manner corresponding to the first information. In this case, the intermediate node may parse the first DOH of the IPv6 packet based on the first parsing indication, to obtain the first information carried in the first DOH, and process the IPv6 packet in the first processing manner corresponding to the first information.

Further, the first information is carried in the first DOH, and the first DOH is parsed by the tail node, but is not parsed by the intermediate node. After determining the first policy, the intermediate node may forcibly parse the first DOH of the IPv6 packet based on the first policy, to obtain the first information carried in the first DOH.

For example, it can be learned from the foregoing content that the first policy may include the first parsing indication. The first parsing indication indicates the intermediate node to parse the first DOH of the IPv6 packet, so as to obtain the first information carried in the first DOH. In S504, the intermediate node may parse the first DOH of the IPv6 packet based on the first parsing indication in the first policy, to obtain the first information carried in the first DOH.

It should be noted that when there are a plurality of intermediate nodes on the transmission path of the IPv6 packet, if an intermediate node that is not configured to perform the packet processing method provided in this embodiment of this application exists in the plurality of intermediate nodes, the intermediate node does not need to parse the first DOH. In this case, even if the intermediate node is not upgraded, because the intermediate node does not parse the first DOH, a problem of disconnection that occurs because the intermediate node is not upgraded and cannot parse the first DOH does not exist.

The intermediate node may further obtain the first policy before S502. For example, the first policy may be from the intermediate node, or the first policy is from a controller in a network. Correspondingly, the intermediate node obtains the first policy in various manners. For example, when the first policy may be from the intermediate node, the intermediate node may obtain the first policy in a static configuration manner. For another example, when the first policy is from the controller in the network, the communication system further includes the controller. The controller is connected to the intermediate node, and the intermediate node may receive the first policy sent by the controller, to obtain the first policy.

S503: The intermediate node processes the IPv6 packet based on the first information.

After obtaining the first information carried in the first DOH, the intermediate node may process the IPv6 packet based on the first information.

For example, the first policy includes the first processing manner corresponding to the first information. In this case, the intermediate node may determine, based on the first information, the first processing manner corresponding to the first information in the first policy, and process the IPv6 packet in the first processing manner. For this process, refer to the explanation of the first policy in S502. Details are not described herein in this embodiment of this application.

For example, the first policy includes: the plurality of processing manners corresponding to the plurality of pieces of information shown in Table 1. If the first information is the information 1 in Table 1, the intermediate node may determine, based on the first policy and the information 1, that the first processing manner is introducing the IPv6 packet into the low-delay tunnel 1, and introduce the IPv6 packet into the low-delay tunnel 1 in the first processing manner.

It is assumed that the first information is a specific APN identifier, and the first processing manner corresponding to the first information is introducing the IPv6 packet into a tunnel. When processing the IPv6 packet based on the first information, the intermediate node may introduce the IPv6 packet including the first DOH carrying the specific APN identifier into the tunnel. It can be learned that, the intermediate node processes the packet in the first processing manner, or the intermediate node may process the packet based on the first processing manner and the first information.

For another example, the first policy does not include the first processing manner corresponding to the first information. In this case, the intermediate node may process the IPv6 packet in a default processing manner that is based on the first information obtained by parsing.

The first information may be based on the APN technology, the IFIT technology, or the VTN technology. When the first information is based on the APN technology, the intermediate node processes the IPv6 packet based on the first information, so that forwarding of the IPv6 packet can be implemented. When the first information is based on the IFIT technology, the intermediate node processes the IPv6 packet based on the first information, so that transmission quality of the IPv6 packet can be measured. In this case, after S505 (or after S502 and before S505), the intermediate node may further forward the IPv6 packet to the tail node. When the first information is based on the VPN technology, the intermediate node processes the IPv6 packet based on the first information, so that transmission quality of the packet can also be ensured.

Further, when the IPv6 packet is forwarded to the tail node, the tail node may decapsulate the IPv6 packet, to obtain a payload part in the IPv6 packet. In this case, the first DOH of the IPv6 packet is removed.

Based on the foregoing, according to the packet processing method provided in this embodiment of this application, the first information is carried in the first DOH of the IPv6 packet, and at least some intermediate nodes may forcibly parse the first DOH based on the local first policy, to obtain the first information carried in the first DOH, so as to process the IPv6 packet based on the first information, so that the intermediate node processes the IPv6 packet based on the first information. Therefore, a related local policy may be flexibly deployed on some intermediate nodes, so that the intermediate nodes can perform parsing to obtain information carried in the first DOH and perform related packet processing, to break through a parsing rule of an extension header of the IPv6 packet.

In addition, because the first DOH is an extension header parsed by the tail node, for intermediate nodes that do not support parsing of a DOH, the nodes do not need to parse the first DOH, and a problem of disconnection that occurs because the first DOH cannot be parsed does not occur on the nodes.

In addition, for the first information that is carried in the IPv6 packet and that is not expected to be used by each node through which the IPv6 packet passes, according to the packet processing method provided in this embodiment of this application, the first information can be carried in the first DOH, an intermediate node that supports parsing of a DOH and through which the IPv6 packet passes parses the first DOH, to obtain and use the first information, and an intermediate node that does not support parsing of the DOH and through which the IPv6 packet passes does not use the first information, thereby meeting a design requirement.

Further, the intermediate node can obtain one or more policies, and each policy has a specific packet. Before parsing the first DOH of the IPv6 packet based on the first policy in S502, the intermediate node may further determine the first policy based on the IPv6 packet received in S501.

For example, the intermediate node may determine the first policy based on an interface for receiving the IPv6 packet in the intermediate node. In this case, different policies may be configured based on different interfaces, so as to use different policies for IPv6 packets received on different interfaces in the intermediate node.

It is assumed that a plurality of policies are configured in the intermediate node, and a mapping relationship between a plurality of interfaces and the plurality of policies in the intermediate node may be shown in Table 2. If the intermediate node receives an IPv6 packet from an interface A, the intermediate node may determine that a policy 1 is the first policy. If the intermediate node receives an IPv6 packet from an interface B, the intermediate node may determine a policy 2 is the first policy.

**Table 2**

| Interface | Policy |
|---|---|
| Interface A | Policy 1 |
| Interface B | Policy 2 |

For another example, the intermediate node may determine the first policy based on a routing entry corresponding to the IPv6 packet. In this case, different policies may be configured based on different routing entries, to use different policies for IPv6 packets corresponding to different routing entries.

For example, the routing entry may include: a destination address, a mask, and a forwarding behavior of the packet, and the intermediate node may query a routing table (including at least one routing entry) based on the destination address and the mask of the IPv6 packet, to obtain the routing entry corresponding to the IPv6 packet. The forwarding behavior in the routing entry corresponding to the IPv6 packet may include information indicating the first policy (for example, directly or indirectly indicating the first policy), and the intermediate node may determine the first policy based on the information.

The routing table may be shown in Table 3, where a forwarding behavior corresponding to a destination address 3 and a mask 3 indicates the policy 1. If the destination address of the IPv6 packet is the address 3, and a mask of the address 3 is the mask 3, the intermediate node may determine that the routing entry corresponding to the IPv6 packet is an entry in which the address 3 and the mask 3 are located in Table 3, and further determine that the policy 1 indicated by the forwarding behavior in the entry is the first policy. The routing table may alternatively include a routing entry that does not indicate a policy, for example, a routing entry in which an address 1 is located and a routing entry in which an address 2 is located in Table 3.

**Table 3**

| Destination address | Mask | Forwarding behavior |
|---|---|---|
| Address 1 | Mask 1 | Outbound interface 1+next hop 1 |
| Address 2 | Mask 2 | Introduce to a tunnel 1 |
| Address 3 | Mask 3 | Policy 1 |

In this embodiment of this application, the two manners of determining the first policy are used as an example. Optionally, the intermediate node may determine the first policy in another manner. This is not limited in this embodiment of this application.

Further, in the foregoing embodiment, that the intermediate node parses the first DOH based on the first policy, to obtain the first information carried in the first DOH is used as an example. Optionally, the first DOH may further carry another information. For example, the first DOH further carries second information different from the first information. For example, the second information may be parsed and used by the intermediate node. For example, the packet processing method provided in this embodiment of this application further includes: The intermediate node parses the first DOH based on a second policy, to obtain the second information carried in the first DOH, where the second policy includes a second processing manner corresponding to the second information. Then, the intermediate node may process the IPv6 packet based on the second information (for example, process the IPv6 packet in the second processing manner). The second processing manner may be the same as or different from the first processing manner.

Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. The second information may also be an option of the first DOH, and the second information is carried in a TLV field of the first DOH. The first information and the second information may be carried in different TLV fields of the first DOH. Similar to the first policy, the second policy may also be from the intermediate node, or the second policy is from the controller. Similar to determining of the first policy, before parsing the first DOH based on the second policy, the intermediate node may determine the second policy based on an interface for receiving the IPv6 packet in the intermediate node; or the intermediate node may determine the second policy based on a routing entry corresponding to the IPv6 packet. For the second policy, refer to the related description of the first policy. For the second information, refer to the related description of the first information. For the second processing manner, refer to the related description of the first processing manner. Details are not described herein again in embodiments of this application.

Optionally, the second information may alternatively not be parsed and used by the intermediate node. In addition, regardless of whether the second information is parsed and used by the intermediate node, the second information may be parsed and used by another intermediate node. Alternatively, the first DOH may carry only the first information, and does not carry the second information. This is not limited in this application. In addition, in this embodiment of this application, that the first DOH carries the first information and the second information is used as an example. The first DOH may further carry more information in addition to the first information and the second information.

For an intermediate node that supports parsing of the first DOH, the intermediate node may parse the first DOH based on each policy in at least one policy (for example, the first policy and the second policy), to obtain information carried in the first DOH, and then process the IPv6 packet based on the information. Information obtained by the intermediate node by parsing the first DOH based on different policies may be the same or may be different. The different policies herein may be based on a same technology or may be based on different technologies. This is not limited in this embodiment of this application.

The first DOH may include at least one TLV field that is in a one-to-one correspondence with at least one piece of information, and the TLV field carries the corresponding information. The intermediate node may parse, based on a policy, a TLV field that is associated with the policy and that is carried in the first DOH, to obtain information carried in the TLV field. For example, as shown in FIG. 8, the first DOH includes: a next header field, a header length field, a TLV field 1, a TLV field 2, and a TLV field 3 that are sequentially arranged. The TLV field 1 carries the information based on the APN technology, the TLV field 2 carries the information based on the IFIT technology, and the TLV field 3 carries the information based on the VTN technology.

Further, when there are a plurality of intermediate nodes on the transmission path of the IPv6 packet, at least one intermediate node configured to perform the packet processing method may exist in the plurality of intermediate nodes. When the at least one intermediate node includes at least two intermediate nodes, for a packet processing method related to each intermediate node, refer to the embodiment shown in FIG. 6. Details are not described herein again in this embodiment of this application.

For example, the transmission path of the IPv6 packet includes a first intermediate node. After receiving the IPv6 packet, the first intermediate node may parse the first DOH based on the first policy, to obtain the first information carried in the first DOH. Then, the first intermediate node may process the IPv6 packet based on the first information, for example, process the IPv6 packet in the first processing manner corresponding to the first information in the first policy. The first intermediate node may further parse the first DOH based on the second policy, to obtain the second information that is carried in the first DOH and that is different from the first information. Then, the first intermediate node may process the IPv6 packet based on the second information, for example, process the IPv6 packet in the second processing manner corresponding to the second information in the second policy. The first processing manner may be the same as or different from the second processing manner. It can be learned that, a same intermediate node may parse the first DOH based on a plurality of policies, to obtain different information carried in the first DOH, and then process the IPv6 packet based on the different information.

Optionally, the transmission path of the IPv6 packet further includes a second intermediate node. After receiving the IPv6 packet, the second intermediate node may parse the first DOH based on a third policy, to obtain the first information carried in the first DOH. Then, the second intermediate node may process the IPv6 packet based on the first information, for example, process the IPv6 packet in a third processing manner corresponding to the first information in the third policy, where the third processing manner is different from the first processing manner used by the first intermediate node. It can be learned that, the transmission path of the IPv6 packet may include different intermediate nodes configured with different policies, but the intermediate nodes obtain same information in the first DOH based on the policies configured for the intermediate nodes, and the nodes may process the IPv6 packet in different processing manners based on the obtained same information.

Similar to the first policy, the third policy may also include a third parsing indication, and the third parsing indication indicates to parse the first DOH, to obtain the first information carried in the first DOH. Similar to the first processing manner, the third processing manner may also include a processing manner that is based on the APN technology, the IFIT technology, or the VTN technology. Similar to the first policy, the second policy may also be from the second intermediate node, or the second policy is from the controller. Similar to determining of the first policy, before parsing the first DOH based on the third policy, the second intermediate node may determine the third policy based on an interface for receiving the IPv6 packet in the second intermediate node; or may determine the third policy based on a routing entry corresponding to the IPv6 packet.

Optionally, the transmission path of the IPv6 packet further includes a third intermediate node. After receiving the IPv6 packet, the third intermediate node may parse the first DOH based on a fourth policy (which is different from or the same as the first policy), to obtain third information (the third information may be the same as or different from the second information) that is carried in the first DOH and that is different from the first information. Then, the third intermediate node may process the IPv6 packet based on the third information, for example, process the IPv6 packet in a fourth processing manner corresponding to the third information in the fourth policy, where the fourth processing manner may be the same as or different from the first processing manner. It can be learned that the plurality of intermediate nodes may include different intermediate nodes configured with different (or the same) policies, and the nodes obtain different information from the first DOH based on the policies configured for the nodes.

Similar to the first policy, the fourth policy may also include a second parsing indication, and the second parsing indication indicates to parse the first DOH, to obtain the third information carried in the first DOH. Similar to the first processing manner, the fourth processing manner may also include a processing manner that is based on the APN technology, the IFIT technology, or the VTN technology. The third information may also be an option of the first DOH, and the third information is carried in a TLV field of the first DOH. When the first information is different from the third information, the first information and the third information may be carried in different TLV fields of the first DOH. Similar to the first policy, the fourth policy may also be from the third intermediate node, or the fourth policy is from the controller. Similar to determining of the first policy, before parsing the first DOH based on the fourth policy, the third intermediate node may determine the fourth policy based on an interface for receiving the IPv6 packet in the third intermediate node; or may determine the fourth policy based on a routing entry corresponding to the IPv6 packet.

For the second policy, the third policy, and the fourth policy, refer to the related description of the first policy. For the second information and the third information, refer to the related description of the first information. For the second processing manner, the third processing manner, and the fourth processing manner, refer to the related description of the first processing manner. Details are not described herein again in this application.

The communication system provided in this embodiment of this application may include the first intermediate node, and the communication system may further include at least one of the second intermediate node and the third intermediate node. This is not limited in this embodiment of this application.

It can be learned from the foregoing content that, in this embodiment of this application, one or more intermediate nodes on the transmission path of the IPv6 packet may be designed based on a requirement to perform the packet processing method provided in this embodiment of this application, and required policies are designed on the intermediate nodes, to implement required processing on the IPv6 packet on the intermediate nodes.

It should be noted that, an order of the operations in the method embodiment provided in embodiments of this application may be properly adjusted, an operation may also be correspondingly added or omitted according to a condition, and variations readily figured out by a person skilled in the art within the technical scope disclosed in this application shall fall within the protection scope of this application. Therefore, details are not described again.

The following uses the scenario shown in FIG. 5 as an example to describe the packet processing method provided in this embodiment of this application.

As shown in FIG. 5, it is assumed that the IPv6 packet is transmitted from the CPE node to the cloud PE node, and the IPv6 packet passes through the ACC node, the AGG node, the MC node, the network PE node, and the like. In this case, the CPE node is a head node on the transmission path of the IPv6 packet, the cloud PE node is a tail node on the transmission path of the IPv6 packet, and the ACC node, the AGG node, the MC node, the network PE node, and the like are all intermediate nodes on the transmission path of the IPv6 packet.

When encapsulating the IPv6 packet, the CPE node may add the first information (for example, an APNID) to the TLV field in the first DOH of the IPv6 packet.

The network PE node is configured with the first policy and supports parsing of the first DOH. When the IPv6 packet is transmitted to the network PE node, the network PE node forcibly parses the first DOH based on the first policy, to obtain the first information carried in the first DOH, and processes the IPv6 packet in the first processing manner corresponding to the first information in the first policy. For example, the network PE node may introduce the IPv6 packet to a tunnel that is between the cloud PE node and the network PE node and that passes through the firewall node, so that the IPv6 packet passes through the firewall node during transmission.

In addition, when the IPv6 packet passes through the firewall node during transmission, the firewall node is an intermediate node. The firewall node may be configured with the third policy (different from the first policy), and supports parsing of the first DOH. When the IPv6 packet is transmitted to the firewall node, the firewall node may forcibly parse the first DOH based on the third policy, to obtain the first information (for example, the APNID) carried in the first DOH, and process the IPv6 packet in the third processing manner corresponding to the first information in the third policy. For example, the firewall node identifies a user based on the APNID carried in the IPv6 packet, provides a firewall service corresponding to the user for the IPv6 packet, and then forwards the IPv6 packet.

If a node on the transmission path of the IPv6 packet, for example, the ACC node, the AGG node, the MC node, or another node, does not support parsing of a DOH, when the IPv6 packet is transmitted to the node, because the first DOH is an extension header parsed by a tail node (the cloud PE node), the nodes do not need to parse the first DOH. Therefore, disconnection is not caused.

With reference to FIG. 1 to FIG. 8, the packet processing method provided in this application is described above in detail. It may be understood that, to implement the functions described in the foregoing methods, a packet processing apparatus needs to include corresponding hardware and/or software modules for performing the functions. This application can be implemented in a form of hardware or a combination of hardware and computer software with reference to the execution processes of the methods described in embodiments disclosed in this specification. Whether a function is performed by hardware or hardware driven by computer software depends on particular applications and design constraints of the technical solutions. A person skilled in the art may use different manners to implement the described functions for each particular application with reference to embodiments, but it should not be considered that the implementation goes beyond the scope of this application.

In this embodiment, the corresponding packet processing apparatus may be divided into functional modules according to the foregoing method embodiments. For example, each functional module may be obtained through division based on each function, or two or more functions may be integrated into one processing module. The integrated module may be implemented in a form of hardware.

When the functional module division manner is used, the following describes, with reference to FIG. 9 to FIG. 11, the packet processing apparatus provided in this application.

FIG. 9 is a schematic diagram of a structure of a packet processing apparatus according to an embodiment of this application. The packet processing apparatus may be, for example, an intermediate node on a transmission path of an IPv6 packet. It should be noted that the transmission path of the IPv6 packet includes a head node, at least one intermediate node, and a tail node, and some or all intermediate nodes on the transmission path include the packet processing apparatus provided in this application. This is not limited in this application.

As shown in FIG. 9, the packet processing apparatus includes: a first receiving module 801, a first parsing module 802, and a first processing module 803.

The first receiving module 801 is configured to receive the IPv6 packet including a first destination options header DOH, where the IPv6 packet includes a routing header RH and the first DOH is located after the RH, or the IPv6 packet does not include an RH. For the operation performed by the first receiving module 801, refer to S501 in the embodiment shown in FIG. 6.

The first parsing module 802 is configured to parse the first DOH based on a first policy, to obtain first information carried in the first DOH. For the operation performed by the first parsing module 802, refer to S502 in the embodiment shown in FIG. 6.

The first processing module 803 is configured to process the IPv6 packet based on the first information. For the operation performed by the first processing module 803, refer to S503 in the embodiment shown in FIG. 6.

It can be learned from the foregoing content that, the first information is carried in the first DOH of the IPv6 packet, and at least some intermediate nodes may forcibly parse the first DOH based on the local first policy, to obtain the first information carried in the first DOH, so as to process the IPv6 packet based on the first information, so that the intermediate node processes the IPv6 packet based on the first information. Therefore, a related local policy may be flexibly deployed on some intermediate nodes, so that the intermediate nodes can perform parsing to obtain information carried in the first DOH and perform related packet processing, to break through a parsing rule of an extension header of the IPv6 packet.

In addition, because the first DOH is an extension header parsed by the tail node, for intermediate nodes that do not support parsing of a DOH, the nodes do not need to parse the first DOH, and a problem of disconnection that occurs because the first DOH cannot be parsed does not occur on the nodes.

In addition, for the first information that is carried in the IPv6 packet and that is not expected to be used by each node through which the IPv6 packet passes, according to the packet processing method provided in this embodiment of this application, the first information can be carried in the first DOH, an intermediate node that supports parsing of a DOH and through which the IPv6 packet passes parses the first DOH, to obtain and use the first information, and an intermediate node that does not support parsing of the DOH and through which the IPv6 packet passes does not use the first information, thereby meeting a design requirement.

Optionally, the first policy includes: a first parsing indication, and the first parsing indication indicates to parse the first DOH, to obtain the first information carried in the first DOH. The first parsing indication may be understood as a switch for parsing the first DOH by the intermediate node. The intermediate node may parse the first DOH based on the first parsing indication in the first policy, to obtain the first information. Certainly, the first policy may alternatively not include the first parsing indication. This is not limited in this application.

Optionally, the first policy includes: a first processing manner corresponding to the first information; and when processing the IPv6 packet based on the first information, the first processing module may process the IPv6 packet in the first processing manner. Before processing the IPv6 packet in the first processing manner, the intermediate node needs to determine the first processing manner in the first policy based on the first information.

Optionally, the first processing manner includes: a processing manner that is based on an APN technology, an IFIT technology, or a VTN technology. Certainly, the first processing manner may alternatively be a processing manner that is based on another technology. This is not limited in this application.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

Optionally, the first DOH further carries second information different from the first information. For example, the second information may be parsed and used by the intermediate node. For example, the packet processing apparatus further includes: a second parsing module and a second processing module. The second parsing module is configured to parse the first DOH based on a second policy, to obtain the second information carried in the first DOH, where the second policy includes: a second processing manner corresponding to the second information. The second processing module is configured to: process the IPv6 packet in the second processing manner. The second processing manner may be the same as or different from the first processing manner. Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. For the second policy, the second information, and the second processing manner, refer to the first policy, the first information, and the first processing manner. Details are not described herein again in this application.

Optionally, regardless of whether the second information is parsed and used by the intermediate node, the second information may be parsed and used by another intermediate node. Certainly, the first DOH may alternatively carry only the first information, and does not carry the second information. This is not limited in this application.

Optionally, the first information is an option of the first DOH, and the first information is carried in a TLV field of the first DOH. The second information may also be an option of the first DOH, and the second information is carried in a TLV field of the first DOH. The first information and the second information may be carried in different TLV fields of the first DOH.

Optionally, the first policy is from the intermediate node, or the first policy is from a controller in a network. In this case, if the first policy is from the intermediate node, before parsing the first DOH based on the first policy, the intermediate node may further obtain the first policy in a static configuration manner. If the first policy is from the controller, before parsing the first DOH based on the first policy, the intermediate node may receive the first policy sent by the controller. Similar to the first policy, the second policy may also be from the intermediate node, or the second policy is from the controller.

Optionally, the packet processing apparatus further includes: a first determining module or a second determining module (which is not shown in FIG. 9). The first determining module is configured to: before the parsing the first DOH based on a first policy, determine the first policy based on an interface for receiving the IPv6 packet in the intermediate node; or the second determining module is configured to: before the parsing the first DOH based on a first policy, determine the first policy based on a routing entry corresponding to the IPv6 packet. When determining the first policy based on the interface for receiving the IPv6 packet in the intermediate node, the intermediate node may configure different policies based on different interfaces, so as to use different policies for IPv6 packets received on different interfaces in the intermediate node. When determining the first policy based on the routing entry corresponding to the IPv6 packet, the intermediate node may configure different policies based on different routing entries, so as to use different policies for IPv6 packets corresponding to different routing entries. For the operations performed by the first determining module and the second determining module, refer to the corresponding descriptions in the foregoing embodiments of the packet processing method.

Similar to determining of the first policy, the packet processing apparatus further includes: a third determining module or a fourth determining module (which is not shown in FIG. 9). The third determining module is configured to: before the parsing the first DOH based on a second policy, determine the second policy based on an interface for receiving the IPv6 packet in the intermediate node; or the fourth determining module is configured to: before the parsing the first DOH based on a second policy, determine the second policy based on a routing entry corresponding to the IPv6 packet. For the operations performed by the third determining module and the fourth determining module, refer to the corresponding descriptions in the foregoing embodiments of the packet processing method.

FIG. 10 is a schematic diagram of a structure of another packet processing apparatus according to an embodiment of this application. The packet processing apparatus may be, for example, an intermediate node on a transmission path of an IPv6 packet. It should be noted that the transmission path of the IPv6 packet includes a head node, at least one intermediate node, and a tail node, and some or all intermediate nodes on the transmission path include the packet processing apparatus provided in this application. This is not limited in this application.

As shown in FIG. 10, based on the packet processing apparatus shown in FIG. 9, the packet processing apparatus further includes: a second receiving module 804. The second receiving module 804 is configured to receive a first policy sent by a controller in a network. For the operation performed by the second receiving module 804, refer to the corresponding description in S502 in the embodiment shown in FIG. 6. Details are not described herein again in this embodiment of this application.

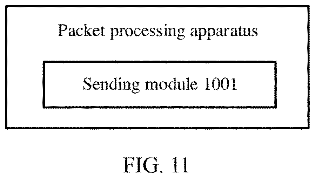

FIG. 11 is a schematic diagram of a structure of another packet processing apparatus according to an embodiment of this application. For example, the packet processing apparatus may belong to the controller in the foregoing embodiment. As shown in FIG. 11, the packet processing apparatus includes: a sending module 1001, configured to send a first policy to at least one intermediate node on a transmission path of an IPv6 packet. The at least one intermediate node is some or all intermediate nodes on the transmission path.

It should be noted that the packet processing apparatuses shown in FIG. 9 to FIG. 11 may also be implemented in a form shown in FIG. 1 or FIG. 2. For example, when modules in the packet processing apparatuses shown in FIG. 9, FIG. 10, or FIG. 11 are implemented in a form of software, the software is stored in the memory 101 in FIG. 1.

An embodiment of this application provides a communication system, where the communication system includes: a head node, at least one intermediate node, and a tail node on a transmission path of an IPv6 packet, where the at least one intermediate node includes a first intermediate node; the first intermediate node is configured to: receive the IPv6 packet including a first DOH, where the IPv6 packet includes an RH and the first DOH is located after the RH, or the IPv6 packet does not include an RH; parse the first DOH based on a first policy, to obtain first information carried in the first DOH; and process the IPv6 packet based on the first information. For the method performed by the first intermediate node, refer to the embodiment shown in FIG. 6.

Optionally, the first policy includes: a first parsing indication, and the first parsing indication indicates to parse the first DOH, to obtain the first information carried in the first DOH. The first parsing indication may be understood as a switch for parsing the first DOH by the intermediate node. The intermediate node may parse the first DOH based on the first parsing indication in the first policy, to obtain the first information. Certainly, the first policy may alternatively not include the first parsing indication. This is not limited in this application.

Optionally, the first policy includes: a first processing manner corresponding to the first information; and when processing the IPv6 packet based on the first information, the intermediate node may process the IPv6 packet in the first processing manner. Before processing the IPv6 packet in the first processing manner, the intermediate node needs to determine the first processing manner in the first policy based on the first information.

Optionally, the first processing manner includes: a processing manner that is based on an APN technology, an IFIT technology, or a VTN technology. Certainly, the first processing manner may alternatively be a processing manner that is based on another technology. This is not limited in this application.

Optionally, the first information includes: information related to the APN technology, the IFIT technology, or the VTN technology. For example, when the first processing manner includes the processing manner that is based on the APN technology, the first information includes the information related to the APN technology (for example, an APN identifier); when the first processing manner includes the processing manner that is based on the IFIT technology, the first information includes the information related to the IFIT technology; or when the first processing manner includes the processing manner that is based on the VTN technology, the first information includes the information related to the VTN technology.

Optionally, the first DOH further carries second information different from the first information. For example, the second information may be parsed and used by the intermediate node. For example, the method further includes: The intermediate node parses the first DOH based on a second policy, to obtain the second information carried in the first DOH, where the second policy includes: a second processing manner corresponding to the second information. Then, the intermediate node may process the IPv6 packet in the second processing manner. The second processing manner may be the same as or different from the first processing manner.

Similar to the first policy, the second policy may also include a second parsing indication, and the second parsing indication indicates to parse the first DOH, to obtain the second information carried in the first DOH. Similar to the first processing manner, the second processing manner may also include a processing manner that is based on the APN technology, the IFIT technology, or the VTN technology. The second information may also be an option of the first DOH, and the second information is carried in a TLV field of the first DOH. The first information and the second information may be carried in different TLV fields of the first DOH. Similar to the first policy, the second policy may also be from the first intermediate node, or the second policy is from the controller. Similar to determining of the first policy, before parsing the first DOH based on the second policy, the first intermediate node may determine the second policy based on an interface for receiving the IPv6 packet in the first intermediate node; or may determine the second policy based on a routing entry corresponding to the IPv6 packet. For the second policy, the second information, and the second processing manner, refer to the first policy, the first information, and the first processing manner. Details are not described herein again in this application.

Optionally, regardless of whether the second information is parsed and used by the intermediate node, the second information may be parsed and used by another intermediate node. Certainly, the first DOH may alternatively carry only the first information, and does not carry the second information. This is not limited in this application.

Optionally, the at least one intermediate node further includes: a second intermediate node; and the second intermediate node is configured to: receive the IPv6 packet; parse the first DOH based on a third policy, to obtain the first information carried in the first DOH, where the third policy includes: a third processing manner corresponding to the first information, and the third processing manner is different from the first processing manner; and process the IPv6 packet in the third processing manner. For the method performed by the second intermediate node, refer to the method in any design in the first aspect or the second aspect. It can be learned that the transmission path of the IPv6 packet may include different intermediate nodes configured with different policies, but the different policies are associated with same information in the first DOH, and processing manners corresponding to the information in the different policies are different, so that different intermediate nodes can perform different processing on the IPv6 packet based on the same information carried in the first DOH.

Similar to the first policy, the third policy may also include a third parsing indication, and the third parsing indication indicates to parse the first DOH, to obtain the first information carried in the first DOH. Similar to the first processing manner, the third processing manner may also include a processing manner that is based on the APN technology, the IFIT technology, or the VTN technology. Similar to the first policy, the second policy may also be from the second intermediate node, or the second policy is from the controller. Similar to determining of the first policy, before parsing the first DOH based on the third policy, the second intermediate node may determine the third policy based on an interface for receiving the IPv6 packet in the second intermediate node; or may determine the third policy based on a routing entry corresponding to the IPv6 packet.

Optionally, the first DOH further carries third information different from the first information, and the at least one intermediate node further includes: a third intermediate node; and the third intermediate node is configured to: receive the IPv6 packet; parse the first DOH based on a fourth policy, to obtain the third information carried in the first DOH, where the fourth policy includes: a fourth processing manner corresponding to the third information; and process the IPv6 packet in the fourth processing manner. For the method performed by the third intermediate node, refer to the method in any design in the first aspect or the second aspect. It can be learned that, the transmission path of the IPv6 packet may include different intermediate nodes configured with different (or same) policies, but the policies are associated with same or different information in the first DOH, and processing manners corresponding to the information in the first DOH in the different policies are the same or different.

Similar to the first policy, the fourth policy may also include a second parsing indication, and the second parsing indication indicates to parse the first DOH, to obtain the third information carried in the first DOH. Similar to the first processing manner, the fourth processing manner may also include a processing manner that is based on the APN technology, the IFIT technology, or the VTN technology. The third information may also be an option of the first DOH, and the third information is carried in a TLV field of the first DOH. When the first information is different from the third information, the first information and the third information may be carried in different TLV fields of the first DOH. Similar to the first policy, the fourth policy may also be from the third intermediate node, or the fourth policy is from the controller. Similar to determining of the first policy, before parsing the first DOH based on the fourth policy, the third intermediate node may determine the fourth policy based on an interface for receiving the IPv6 packet in the third intermediate node; or may determine the fourth policy based on a routing entry corresponding to the IPv6 packet.

For the second policy, the third policy, and the fourth policy, refer to the related description of the first policy. For the second information and the third information, refer to the related description of the first information. For the second processing manner, the third processing manner, and the fourth processing manner, refer to the related description of the first processing manner. Details are not described herein again in this application.

It can be learned from the foregoing content that, in this application, one or more intermediate nodes may be designed based on a requirement to perform the packet processing method provided in embodiments of this application, and policies of the intermediate nodes are designed based on a requirement, to implement required processing on the IPv6 packet on the intermediate nodes.

Optionally, the communication system further includes a controller, and the controller is configured to send a policy to at least one intermediate node in the communication system. For example, the controller is configured to send the first policy (or the first policy and the second policy) to the first intermediate node, send the third policy to the second intermediate node, and send the fourth policy to the third intermediate node.

Optionally, the first information is an option of the first DOH, and the first information is carried in a TLV field of the first DOH.

Optionally, the first policy is from the first intermediate node, or the first policy is from a controller in a network. In this case, if the first policy is from the first intermediate node, before parsing the first DOH based on the first policy, the first intermediate node may further obtain the first policy in a static configuration manner. If the first policy is from the controller, before parsing the first DOH based on the first policy, the first intermediate node may receive the first policy sent by the controller.

Optionally, before parsing the first DOH based on the first policy, the first intermediate node may determine the first policy based on an interface for receiving the IPv6 packet in the intermediate node; or the first intermediate node may determine the first policy based on a routing entry corresponding to the IPv6 packet. When determining the first policy based on the interface for receiving the IPv6 packet in the first intermediate node, the first intermediate node may configure different policies based on different interfaces, so as to use different policies for IPv6 packets received on different interfaces in the first intermediate node. When determining the first policy based on the routing entry corresponding to the IPv6 packet, the first intermediate node may configure different policies based on different routing entries, so as to use different policies for IPv6 packets corresponding to different routing entries.

Optionally, the communication system further includes a controller, and the controller is configured to send a policy to at least one intermediate node in the communication system. For example, the controller is configured to send the first policy (or the first policy and the second policy) to the first intermediate node, send the third policy to the second intermediate node, and send the fourth policy to the third intermediate node.

An embodiment of this application further provides a computer-readable storage medium. The computer-readable storage medium stores instructions, and when the instructions are run on a computer, the computer is enabled to perform any method performed by an intermediate node or a controller provided in embodiments of this application.

An embodiment of this application further provides a computer program product including instructions. When the computer program product is run on a computer, the computer is enabled to perform any method performed by an intermediate node or a controller provided in embodiments of this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a computer network, or another programmable apparatus. The computer instruction may be stored in a computer-readable storage medium, or transmitted from one computer-readable storage medium to another computer-readable storage medium. For example, the computer instruction may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be noted that information, a policy, and a packet in this application are all authorized by a user or fully authorized by all parties, and collection, use, and processing of the information, the policy, and the packet need to comply with related laws, regulations, and standards of related countries and regions.

In this application, the terms "first", "second", and the like are merely intended for description, but cannot be understood as an indication or implication of relative importance. The term "at least one" refers to one or more, and the term "a plurality of" refers to two or more, unless expressly limited otherwise. The term "and/or" describes only an association relationship between associated objects and indicates that there may be three relationships. For example, A and/or B may represent the following three cases: Only A exists, both A and B exist, and only B exists.

For different types of embodiments such as the method embodiment and the apparatus embodiment provided in embodiments of this application, refer to each other. This is not limited in embodiments of this application.

In the corresponding embodiments provided in this application, it should be understood that the disclosed system, apparatus, and the like may be implemented in other composition manners. For example, the described apparatus embodiment is merely an example. For example, division into the modules is merely logical function division and may be other division in actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separated, and parts described as units may or may not be physical units, that is, may be located in one position, or may be distributed on a plurality of apparatuses. Some or all of the units may be selected based on actual requirements to achieve the objectives of the solutions of embodiments.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet processing method, wherein the method is executed by an intermediate node on a transmission path of an internet protocol version 6 IPv6 packet, and the method comprises:
receiving the IPv6 packet comprising a first destination options header DOH, wherein the IPv6 packet comprises a routing header RH and the first DOH is located after the RH, or the IPv6 packet does not comprise an RH;
parsing the first DOH based on a first policy, to obtain first information carried in the first DOH; and
processing the IPv6 packet based on the first information.

2. The method according to claim 1, wherein the first policy comprises: a first parsing indication, and the first parsing indication indicates to parse the first DOH, to obtain the first information carried in the first DOH.

3. The method according to claim 1 or 2, wherein the first policy comprises: a first processing manner corresponding to the first information; and
the processing the IPv6 packet based on the first information comprises:
processing the IPv6 packet in the first processing manner.

4. The method according to claim 3, wherein the first processing manner comprises a processing manner that is based on an application-aware networking APN technology, an in-situ flow information telemetry IFIT technology, or a virtual transport network VTN technology.

5. The method according to any one of claims 1 to 4, wherein the first information comprises:
information related to the APN technology, the IFIT technology, or the VTN technology.

6. The method according to any one of claims 1 to 5, wherein the first DOH further carries second information different from the first information.

7. The method according to claim 6, wherein the method further comprises:
parsing the first DOH based on a second policy, to obtain the second information carried in the first DOH, wherein the second policy comprises: a second processing manner corresponding to the second information; and
processing the IPv6 packet in the second processing manner.

8. The method according to claim 7, wherein the second policy comprises: a second parsing indication, and the second parsing indication indicates to parse the first DOH, to obtain the second information carried in the first DOH.

9. The method according to claim 7 or 8, wherein the second processing manner comprises a processing manner that is based on the APN technology, the IFIT technology, or the VTN technology.

10. The method according to any one of claims 1 to 9, wherein the first information is an option of the first DOH, and the first information is carried in a type-length-value TLV field of the first DOH.

11. The method according to any one of claims 1 to 10, wherein the first policy is from the intermediate node, or the first policy is from a controller in a network.

12. The method according to any one of claims 1 to 11, wherein before the parsing the first DOH based on a first policy, the method further comprises:
determining the first policy based on an interface for receiving the IPv6 packet in the intermediate node; or
determining the first policy based on a routing entry corresponding to the IPv6 packet.

13. A packet processing apparatus, wherein the packet processing apparatus belongs to an intermediate node on a transmission path of an internet protocol version 6 IPv6 packet, and the packet processing apparatus comprises:
a first receiving module, configured to receive the IPv6 packet comprising a first destination options header DOH, wherein the IPv6 packet comprises a routing header RH and the first DOH is located after the RH, or the IPv6 packet does not comprise an RH;
a first parsing module, configured to parse the first DOH based on a first policy, to obtain first information carried in the first DOH; and
a first processing module, configured to process the IPv6 packet based on the first information.

14. The packet processing apparatus according to claim 13, wherein the first policy comprises:
a first parsing indication, and the first parsing indication indicates to parse the first DOH, to obtain the first information carried in the first DOH.

15. The packet processing apparatus according to claim 13 or 14, wherein the first policy comprises: a first processing manner corresponding to the first information; and
the first processing module is configured to:
process the IPv6 packet in the first processing manner.

16. The packet processing apparatus according to claim 15, wherein the first processing manner comprises a processing manner that is based on an application-aware networking APN technology, an in-situ flow information telemetry IFIT technology, or a virtual transport network VTN technology.

17. The packet processing apparatus according to any one of claims 13 to 16, wherein the first information comprises: information related to the APN technology, the IFIT technology, or the VTN technology.

18. The packet processing apparatus according to any one of claims 13 to 17, wherein the first DOH further carries second information different from the first information.

19. The packet processing apparatus according to any one of claims 15 to 17, wherein the first DOH further carries second information different from the first information, and the packet processing apparatus further comprises:
a second parsing module, configured to parse the first DOH based on a second policy, to obtain the second information carried in the first DOH, wherein the second policy comprises: a second processing manner corresponding to the second information, and the second processing manner is different from the first processing manner; and
a second processing module, configured to process the IPv6 packet in the second processing manner.

20. The packet processing apparatus according to claim 19, wherein the second policy comprises: a second parsing indication, and the second parsing indication indicates to parse the first DOH, to obtain the second information carried in the first DOH.

21. The packet processing apparatus according to claim 19 or 20, wherein the second processing manner comprises a processing manner that is based on the APN technology, the IFIT technology, or the VTN technology.

22. The packet processing apparatus according to any one of claims 13 to 21, wherein the first information is an option of the first DOH, and the first information is carried in a type-length-value TLV field of the first DOH.

23. The packet processing apparatus according to any one of claims 13 to 22, wherein the first policy is from the intermediate node, or the first policy is from a controller in a network.

24. The packet processing apparatus according to any one of claims 13 to 23, wherein the packet processing apparatus further comprises:
a first determining module, configured to: before the parsing the first DOH based on a first policy, determine the first policy based on an interface for receiving the IPv6 packet in the intermediate node; or
a second determining module, configured to: before the parsing the first DOH based on a first policy, determine the first policy based on a routing entry corresponding to the IPv6 packet.

25. A communication device, comprising: a processor and a memory, wherein the memory stores a program, and the processor is configured to execute the program stored in the memory, to implement the packet processing method according to any one of claims 1 to 12.

26. A communication system, wherein the communication system comprises: a head node, at least one intermediate node, and a tail node on a transmission path of an internet protocol version 6 IPv6 packet; the at least one intermediate node comprises a first intermediate node; and the first intermediate node is configured to:
receive the IPv6 packet comprising a first destination options header DOH, wherein the IPv6 packet comprises a routing header RH and the first DOH is located after the RH, or the IPv6 packet does not comprise an RH;
parse the first DOH based on a first policy, to obtain first information carried in the first DOH; and
process the IPv6 packet based on the first information.

27. The communication system according to claim 26, wherein the first policy comprises: a first parsing indication, and the first parsing indication indicates to parse the first DOH, to obtain the first information carried in the first DOH.

28. The communication system according to claim 26 or 27, wherein the first policy comprises: a first processing manner corresponding to the first information; and
the first intermediate node is configured to process the IPv6 packet in the first processing manner.

29. The communication system according to claim 28, wherein the first processing manner comprises a processing manner that is based on an application-aware networking APN technology, an in-situ flow information telemetry IFIT technology, or a virtual transport network VTN technology.

30. The communication system according to any one of claims 26 to 29, wherein the first information comprises information related to the APN technology, the IFIT technology, or the VTN technology.

31. The communication system according to any one of claims 26 to 30, wherein the first DOH further carries second information different from the first information; and the first intermediate node is further configured to:
parse the first DOH based on a second policy, to obtain the second information carried in the first DOH, wherein the second policy comprises: a second processing manner corresponding to the second information; and
process the IPv6 packet in the second processing manner.

32. The communication system according to any one of claims 28 to 31, wherein the first policy comprises: the first processing manner corresponding to the first information; the first intermediate node is configured to process the IPv6 packet in the first processing manner; the at least one intermediate node further comprises: a second intermediate node; and the second intermediate node is configured to:
receive the IPv6 packet;
parse the first DOH based on a third policy, to obtain the first information carried in the first DOH, wherein the third policy comprises: a third processing manner corresponding to the first information, and the third processing manner is different from the first processing manner; and
process the IPv6 packet in the third processing manner.

33. The communication system according to any one of claims 26 to 32, wherein the first DOH further carries third information different from the first information, and the at least one intermediate node further comprises: a third intermediate node; and the third intermediate node is configured to:
receive the IPv6 packet;
parse the first DOH based on a fourth policy, to obtain the third information carried in the first DOH, wherein the fourth policy comprises: a fourth processing manner corresponding to the third information; and
process the IPv6 packet in the fourth processing manner.

34. The communication system according to any one of claims 26 to 33, wherein the first information is an option of the first DOH, and the first information is carried in a type-length-value TLV field of the first DOH.

35. The communication system according to any one of claims 26 to 34, wherein the first policy is from the first intermediate node, or the first policy is from a controller in a network.

36. The communication system according to any one of claims 26 to 35, wherein the first intermediate node is further configured to:
determine the first policy based on an interface for receiving the IPv6 packet in the first intermediate node; or
determine the first policy based on a routing entry corresponding to the IPv6 packet.

37. A computer-readable storage medium, wherein the computer-readable storage medium stores instructions, and when the instructions are run on a computer, the computer is enabled to perform the method according to any one of claims 1 to 12.

38. A computer program product comprising instructions, wherein when the computer program product is run on a computer, the computer is enabled to perform the method according to any one of claims 1 to 12.
